# EUROPEAN PATENT SPECIFICATION

(11) **EP 3 254 030 B1**
(45) Date of publication and mention of the grant of the patent: **22.05.2019**
(21) Application number: 16706096.1
(22) Date of filing: 04.02.2016
(51) Int. Cl.: F23R 3/00, F23R 3/26, F23C 9/08, F02C 3/34, F23R 3/04

(54) **TURBINE SYSTEM WITH EXHAUST GAS RECIRCULATION, SEPARATION AND EXTRACTION**
TURBINENSYSTEM MIT RÜCKFÜHRUNG, TRENNUNG UND EXTRAKTION VON ABGAS
SYSTÈME DE TURBINE À RECIRCULATION, SÉPARATION ET EXTRACTION DE GAZ D'ÉCHAPPEMENT

(30) Priority: 04.02.2015 US 201562112123 P; 03.02.2016 US 201615014981
(43) Date of publication of application: 13.12.2017
(73) Proprietor: ExxonMobil Upstream Research Company, Houston, Texas 77252-2189 (US)
(72) Inventor: ALLEN, Jonathan Kay, Greenville, South Carolina 29615 (US); BORCHERT, Bradford David, Greenville, South Carolina 29615 (US); TROUT, JesseEdwin, Greenville, South Carolina 29615 (US); SLOBODYANSKIY, Ilya Aleksandrovich, Greenville, South Carolina 29615 (US); VALEEV, Almaz, Greenville, South Carolina 29615 (US); SIDKO, Igor Petrovich, Greenville, South Carolina 29615 (US); ROBERTS, Matthew Eugene, Greenville, South Carolina 29615 (US); GINESIN, Leonid Yul'evich, Greenville, South Carolina 29615 (US)
(74) Representative: Abel & Imray
(86) International application number: PCT/US2016/016632
(87) International publication number: WO 2016/126985

(56) References cited:
- EP-A2- 2 578 942
- WO-A1-2008/023986
- US-A1- 2013 125 554
- US-A1- 2014 123 660

## Description

### BACKGROUND

The subject matter disclosed herein relates to gas turbine engines, and more particularly, to systems for exhausting combustion gases from gas turbine engines.

Gas turbine engines are used in a wide variety of applications, such as power generation, aircraft, and various machinery. Gas turbine engines generally combust a fuel with an oxidant (e.g., air) in a combustor section to generate hot combustion products, which then drive one or more turbine stages of a turbine section. In turn, the turbine section drives one or more compressor stages of a compressor section, thereby compressing oxidant for intake into the combustor section along with the fuel. Again, the fuel and oxidant mix in the combustor section, and then combust to produce the hot combustion products. These combustion products may include unburnt fuel, residual oxidant, and various emissions (e.g., nitrogen oxides) depending on the condition of combustion. Gas turbine engines typically consume a vast amount of air as the oxidant, and output a considerable amount of exhaust gas into the atmosphere. In other words, the exhaust gas is typically wasted as a byproduct of the gas turbine operation. Prior art gas turbine systems with exhaust gas recirculation are known from US2014/123660, EP2578942 and US2013125554.

### BRIEF DESCRIPTION

The objective of the invention is solved by a system according to claim 1 and a method according to claim 11.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of a gas turbine system configured to recirculate combustion products generated by a turbine combustor;
FIG. 2 is a cross-sectional side view schematic of an embodiment of the turbine combustor of FIG. 1;
FIG. 3 is a cross-sectional side view schematic of an embodiment of a flow sleeve of the turbine combustor of FIG. 2; and
FIG. 4 is a cutaway perspective view of an embodiment of a flow sleeve of the turbine combustor of FIG. 2.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Detailed example embodiments are disclosed herein. However, specific structural and functional details disclosed herein are merely representative for purposes of describing example embodiments. Embodiments of the present invention may, however, be embodied in many alternate forms, and should not be construed as limited to only the embodiments set forth herein.

Accordingly, while example embodiments are capable of various modifications and alternative forms, embodiments thereof are illustrated by way of example in the figures and will herein be described in detail. It should be understood, however, that there is no intent to limit example embodiments to the particular forms disclosed, but to the contrary, example embodiments are to cover all modifications, equivalents, and alternatives falling within the scope of the present invention.

The terminology used herein is for describing particular embodiments only and is not intended to be limiting of example embodiments. As used herein, the singular forms "a", "an" and "the" are intended to include the plural forms as well, unless the context clearly indicates otherwise. The terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Although the terms first, second, primary, secondary, etc. may be used herein to describe various elements, these elements should not be limited by these terms. These terms are only used to distinguish one element from another. For example, but not limiting to, a first element could be termed a second element, and, similarly, a second element could be termed a first element, without departing from the scope of example embodiments. As used herein, the term "and/or" includes any, and all, combinations of one or more of the associated listed items.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like; merely describe the configuration shown in the FIGS. Indeed, the element or elements of an embodiment of the present invention may be oriented in any direction and the terminology, therefore, should be understood as encompassing such variations.

As discussed in detail below, the disclosed embodiments relate generally to gas turbine systems with exhaust gas recirculation (EGR), and particularly stoichiometric operation of the gas turbine systems using EGR. The gas turbine systems disclosed herein may be coupled to a hydrocarbon production system and/or include a control system, a combined cycle system, an exhaust gas supply system, and/or an exhaust gas processing system, and each of these systems may be configured and operated as described in U.S. Patent Application No. 2014/0182301, entitled "SYSTEM AND METHOD FOR A TURBINE COMBUSTOR," filed on October 30, 2013, and U.S. Patent Application No. 2014/ 0123660, entitled "SYSTEM AND METHOD FOR A TURBINE COMBUSTOR," filed on October 30, 2013. For example, the gas turbine systems may include stoichiometric exhaust gas recirculation (SEGR) gas turbine engines configured to recirculate the exhaust gas along an exhaust recirculation path, stoichiometrically combust fuel and oxidant along with at least some of the recirculated exhaust gas, and capture the exhaust gas for use in various target systems. The recirculation of the exhaust gas along with stoichiometric combustion may help to increase the concentration level of carbon dioxide (CO₂) in the exhaust gas, which can then be post treated to separate and purify the CO₂ and nitrogen (N₂) for use in various target systems. The gas turbine systems also may employ various exhaust gas processing (e.g., heat recovery, catalyst reactions, etc.) along the exhaust recirculation path, thereby increasing the concentration level of CO₂, reducing concentration levels of other emissions (e.g., carbon monoxide, nitrogen oxides, and unburnt hydrocarbons), and increasing energy recovery (e.g., with heat recovery units). Furthermore, the gas turbine engines may be configured to combust the fuel and oxidant with one or more diffusion flames (e.g., using diffusion fuel nozzles), premix flames (e.g., using premix fuel nozzles), or any combination thereof. In certain embodiments, the diffusion flames may help to maintain stability and operation within certain limits for stoichiometric combustion, which in turn helps to increase production of CO₂. For example, a gas turbine system operating with diffusion flames may enable a greater quantity of EGR, as compared to a gas turbine system operating with premix flames. In turn, the increased quantity of EGR helps to increase CO₂ production. Possible target systems include pipelines, storage tanks, carbon sequestration systems, and hydrocarbon production systems, such as enhanced oil recovery (EOR) systems.

In particular, present embodiments are directed toward gas turbine systems, namely stoichiometric exhaust gas recirculation (SEGR) systems having features configured to recirculate combustion products and to direct the recirculated combustion products to various locations within a combustor of the engine. For example, a combustion fluid (e.g., a mixture of oxidant and fuel) may combust within a combustion chamber of the combustor, and the hot combustion gases (e.g., combustion products) drive rotation of a turbine. At least some of the combustion products may be recirculated through the combustor, i.e., exhaust gas recirculation (EGR). In some cases, the combustion products may be directed from the turbine to a recirculating fluid compressor (e.g., EGR compressor) that compresses the combustion products, thereby generating compressed combustion products (e.g., a recirculating fluid or EGR fluid). Some of the recirculating fluid (e.g., a first flow of the recirculating fluid) may pass through an impingement sleeve in a transition piece of the combustor and travel along a combustor liner, thereby cooling the combustor liner. The first flow of the recirculating fluid may then enter the combustion chamber via one or more openings in a forward portion (e.g., upstream portion) of the combustor liner and mix with the combustion fluids in the combustion chamber. In certain embodiments, some of the recirculating fluid (e.g., a second flow of the recirculating fluid) may be directed toward and extracted through an extraction conduit. The recirculating fluid extracted via the extraction conduit may be used in any of a variety of downstream processes, such as enhanced oil recovery (EOR), carbon sequestration, CO₂ injection into a well, and so forth.

The gas turbine system may be configured to operate in a stoichiometric combustion mode of operation (e.g., a stoichiometric control mode) and a non-stoichiometric combustion mode of operation (e.g., a non-stoichiometric control mode), such as a fuel-lean control mode or a fuel-rich control mode. In the stoichiometric control mode, the combustion generally occurs in a substantially stoichiometric ratio of a fuel and oxidant, thereby resulting in substantially stoichiometric combustion. In particular, stoichiometric combustion generally involves consuming substantially all of the fuel and oxidant in the combustion reaction, such that the products of combustion are substantially or entirely free of unburnt fuel and oxidant. One measure of stoichiometric combustion is the equivalence ratio, or phi (φ), which is the ratio of the actual fuel/oxidant ratio relative to the stoichiometric fuel/oxidant ratio. An equivalence ratio of greater than 1.0 results in a fuel-rich combustion of the fuel and oxidant, whereas an equivalence ratio of less than 1.0 results in a fuel-lean combustion of the fuel and oxidant. In contrast, an equivalence ratio of 1.0 results in combustion that is neither fuel-rich nor fuel-lean, thereby substantially consuming all of the fuel and oxidant in the combustion reaction. In context of the disclosed embodiments, the term stoichiometric or substantially stoichiometric may refer to an equivalence ratio of approximately 0.95 to approximately 1.05. However, the disclosed embodiments may also include an equivalence ratio of 1.0 plus or minus 0.01, 0.02, 0.03, 0.04, 0.05, or more. Again, the stoichiometric combustion of fuel and oxidant in the turbine-based service system may result in products of combustion or exhaust gas with substantially no unburnt fuel or oxidant remaining. For example, the exhaust gas may have less than 1, 2, 3, 4, or 5 percent by volume of oxidant (e.g., oxygen), unburnt fuel or hydrocarbons (e.g., HCs), nitrogen oxides (e.g., NOx), carbon monoxide (CO), sulfur oxides (e.g., SOx), hydrogen, and other products of incomplete combustion. By further example, the exhaust gas may have less than approximately 10, 20, 30, 40, 50, 60, 70, 80, 90, 100, 200, 300, 400, 500, 1000, 2000, 3000, 4000, or 5000 parts per million by volume (ppmv) of oxidant (e.g., oxygen), unburnt fuel or hydrocarbons (e.g., HCs), nitrogen oxides (e.g., NO_{X}), carbon monoxide (CO), sulfur oxides (e.g., SO_{X}), hydrogen, and other products of incomplete combustion. However, the disclosed embodiments also may produce other ranges of residual fuel, oxidant, and other emissions levels in the exhaust gas. As used herein, the terms emissions, emissions levels, and emissions targets may refer to concentration levels of certain products of combustion (e.g., NOx, CO, SO_{X}, O₂, N₂, H₂, HCs, etc.), which may be present in recirculated gas streams, vented gas streams (e.g., exhausted into the atmosphere), and gas streams used in various target systems (e.g., the hydrocarbon production system).

In the disclosed embodiments, various flow separating and flow guiding elements are provided to separate the combustion fluid (e.g., fuel, oxidant, etc.), the first flow of recirculating fluid (e.g., EGR fluid), and the second flow of recirculating fluid (e.g., EGR fluid) from one another and to direct these fluids to appropriate locations. For example, a flow sleeve may separate the first flow of the recirculating fluid that flows along the combustor liner from the second flow of the recirculating fluid that flows toward the extraction conduit. By way of another example, a flange may extend radially outward from the flow sleeve toward a combustor housing (e.g., case), thereby separating the second flow of the recirculating fluid from the combustion fluid in a head end of the combustor. The disclosed embodiments may advantageously recirculate the combustion products for cooling the combustion liner and for combustion, as well as for any of a variety of downstream processes (e.g., enhanced oil recovery, CO₂ injection into a well, etc.). Such recirculation techniques may reduce emissions of nitrous oxides and carbon monoxide from the engine. Furthermore, the disclosed embodiments may advantageously provide components configured to separate the various fluids (e.g., combustion fluids and recirculating fluids) from one another within the engine and to efficiently direct the various fluids to appropriate locations.

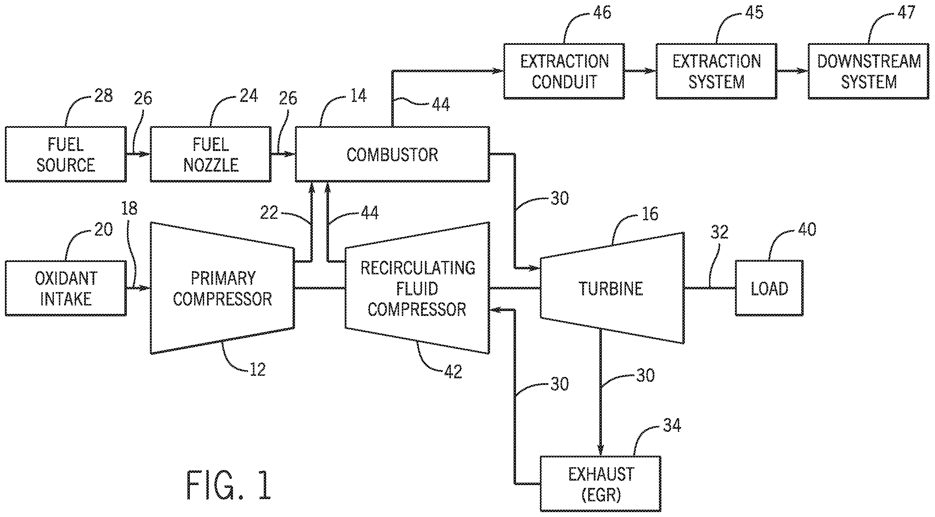

Turning now to the drawings, FIG. 1 illustrates a block diagram of an embodiment of a gas turbine system 10. The system 10 may include a stoichiometric exhaust gas recirculation gas turbine engine, as discussed below. As shown, the system 10 includes a primary compressor 12, a turbine combustor 14 (e.g., combustor), and a turbine 16. The primary compressor 12 is configured to receive oxidant 18 from an oxidant source 20 and to provide pressurized oxidant 22 to the combustor 14. The oxidant 18 may include air, oxygen, oxygen-enriched air, oxygen-reduced air, or any combination thereof. Any discussion of air, oxygen, or oxidant herein is intended to cover any or all of the oxidants listed above. Additionally, a fuel nozzle 24 is configured to receive a liquid fuel and/or gas fuel 26, such as natural gas or syngas, from a fuel source 28 and to provide the fuel 26 to the combustor 14. Although one combustor 14 and one fuel nozzle 24 are shown for clarity, the system 10 may include multiple combustors (e.g., 2 to 20) 14 and/or each combustor 14 may receive fuel 26 from multiple fuel nozzles 24 (e.g., 2 to 10).

The combustor 14 ignites and combusts the mixture of the pressurized oxidant 22 and the fuel 26 (e.g., a fuel-oxidant mixture), and then passes hot pressurized combustion gases 30 into the turbine 16. Turbine blades are coupled to a shaft 32, which may be coupled to several other components throughout the turbine system 10. As the combustion gases 30 pass through the turbine blades in the turbine 16, the turbine 16 is driven into rotation, which causes the shaft 32 to rotate. Eventually, the combustion gases 30 exit the turbine 16 via an exhaust outlet 34. As shown, the shaft 32 is coupled to a load 40, which is powered via rotation of the shaft 32. For example, the load 40 may be any suitable device that may generate power or work via the rotational output of the system 10, such as an electrical generator.

Compressor blades are included as components of the primary compressor 12. In the illustrated embodiment, the blades within the primary compressor 12 are coupled to the shaft 32, and will rotate as the shaft 32 is driven to rotate by the turbine 16, as described above. The rotation of the blades within the compressor 12 compresses the oxidant 18 from the oxidant source 20 into the pressurized oxidant 22. The pressurized oxidant 22 is then fed into the combustor 14, either directly or via the fuel nozzles 24 of the combustors 14. For example, in some embodiments, the fuel nozzles 24 mix the pressurized oxidant 22 and fuel 26 to produce a suitable fuel-oxidant mixture ratio for combustion (e.g., a combustion that causes the fuel to more completely burn) so as not to waste fuel or cause excess emissions.

In the illustrated embodiment, the system 10 includes a recirculating fluid compressor 42 (e.g., EGR compressor), which may be driven by the shaft 32. As shown, at least some of the combustion gases 30 (e.g., exhaust gas or EGR fluid) flow from the exhaust outlet 34 into the recirculating fluid compressor 42. The recirculating fluid compressor 42 compresses the combustion gases 30 and recirculates at least some of the pressurized combustion gases 44 (e.g., recirculating fluid) toward the combustor 14. As discussed in more detail below, a first flow of the recirculating fluid 44 may be utilized to cool a liner of the combustor 14. A portion of the first flow may be subsequently directed into a combustion chamber of the combustor 14 for combustion, while another portion of the first flow may be directed toward an extraction conduit 46 (e.g., exhaust gas extraction conduit). Additionally, a second flow of the recirculating fluid 44 may not flow along the liner, but rather, may flow between a flow sleeve and a housing of the combustor toward the extraction conduit 46. The recirculating fluid 44 may be used in any of a variety of manners. For example, the recirculating fluid 44 extracted through the extraction conduit 46 may flow to an extraction system 45 (e.g., an exhaust gas extraction system), which may receive the recirculating fluid 44 from the extraction conduit 46, treat the recirculating fluid 44, and then supply or distribute the recirculating fluid 44 to one or more various downstream systems 47 (e.g., an enhanced oil recovery system or a hydrocarbon production system). The downstream systems 47 may utilize the recirculating fluid 44 in chemical reactions, drilling operations, enhanced oil recovery, CO₂ injection into a well, carbon sequestration, or any combination thereof.

As noted above, the gas turbine system 10 may be configured to operate in a stoichiometric combustion mode of operation (e.g., a stoichiometric control mode) and a non-stoichiometric combustion mode of operation (e.g., a non-stoichiometric control mode), such as a fuel-lean control mode or a fuel-rich control mode. In the stoichiometric control mode, the combustion generally occurs in a substantially stoichiometric ratio of the fuel and oxidant, thereby resulting in substantially stoichiometric combustion. In context of the disclosed embodiments, the term stoichiometric or substantially stoichiometric may refer to an equivalence ratio of approximately 0.95 to approximately 1.05. However, the disclosed embodiments may also include an equivalence ratio of 1.0 plus or minus 0.01, 0.02, 0.03, 0.04, 0.05, or more. Again, the stoichiometric combustion of fuel and oxidant in the combustor 14 may result in products of combustion or exhaust gas (e.g., 42) with substantially no unburnt fuel or oxidant remaining. For example, the recirculating fluid 44 may have less than 1, 2, 3, 4, or 5 percent by volume of oxidant (e.g., oxygen), unburnt fuel or hydrocarbons (e.g., HCs), nitrogen oxides (e.g., NOx), carbon monoxide (CO), sulfur oxides (e.g., SO_{X}), hydrogen, and other products of incomplete combustion. By further example, the recirculating fluid 44 may have less than approximately 10, 20, 30, 40, 50, 60, 70, 80, 90, 100, 200, 300, 400, 500, 1000, 2000, 3000, 4000, or 5000 parts per million by volume (ppmv) of oxidant (e.g., oxygen), unburnt fuel or hydrocarbons (e.g., HCs), nitrogen oxides (e.g., NOx), carbon monoxide (CO), sulfur oxides (e.g., SO_{X}), hydrogen, and other products of incomplete combustion. The low oxygen content of the recirculating fluid 44 may be achieved in any of a variety of manners. For example, in some cases, a stoichiometric mixture or approximately stoichiometric mixture of combustion fluids burn to generate combustion gases 30 having the low oxygen content. Additionally or alternatively, in some embodiments, various filtering or processing steps (e.g., oxidation catalysts or the like) may be implemented between the exhaust outlet 34 and/or the recirculating fluid compressor 42, or at any other suitable location within the system 10, to generate the low oxygen recirculating fluid 44. As noted above, the pressurized, low oxygen recirculating fluid 44 may be used for cooling a liner of the combustor 14, may be provided to the combustor for combustion, and/or may be extracted from the combustor for use in various chemical reactions, drilling operations, enhanced oil recovery (EOR), carbon sequestration, CO₂ injection into a well, and so forth.

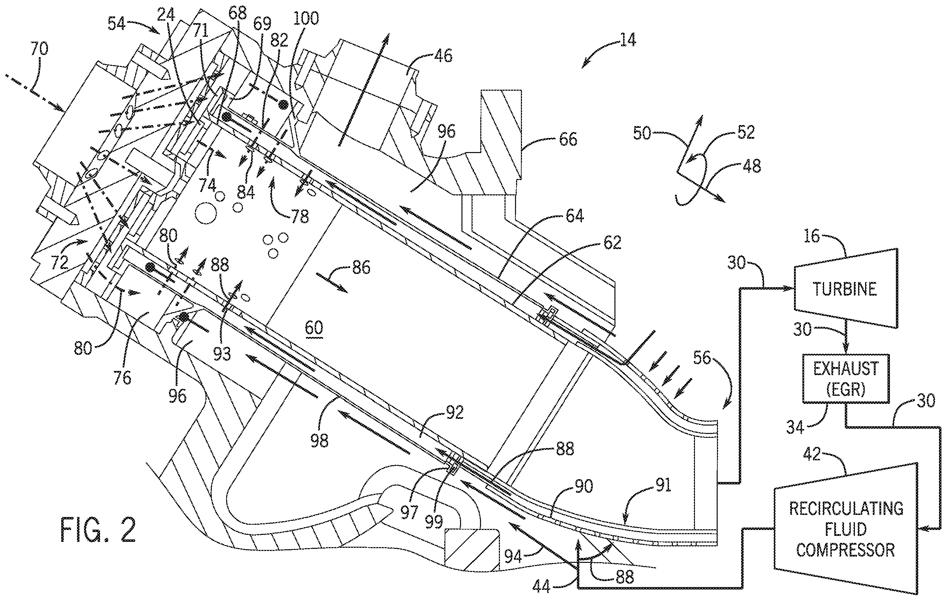

FIG. 2 is a cross-sectional side view schematic of an embodiment of the combustor 14 of FIG. 1. The combustor 14 may be described herein with reference to an axial axis or direction 48, a radial axis or direction 50, and a circumferential axis or direction 52. The combustor 14 extends from an upstream end 54 to a downstream end 56. As shown, the combustor 14 includes a combustion chamber 60 defined by a liner 62. The combustor 14 also includes a flow sleeve 64 disposed circumferentially about at least a portion of the liner 62. The combustion chamber 60, the liner 62, and the flow sleeve 64 are disposed within a combustor housing 66 (e.g., case).

A cap 68 is positioned at a forward end 69 of the flow sleeve 64. In some embodiments, the cap 68 may be coupled to the forward end 69 of the flow sleeve 64 to form a seal 71 via any suitable technique (e.g., bolted, welded, or the like). A combustion fluid 70 (e.g., the fuel 26, the pressurized oxidant 22, and/or a mixture thereof) is directed into a head end 72 of the combustor 14 and into the combustion chamber 60. For example, in the illustrated embodiment, one or more fuel nozzles 24 disposed within the head end 72 of the combustor 14 provide a first flow 74 of the combustion fluid 70 into the combustion chamber 60. Additionally, a second flow 80 of the combustion fluid 70 flows into a first generally annular volume 76 between a forward portion 78 of the flow sleeve 64 and the case 66, and then subsequently flows radially into the combustion chamber 60 via one or more first openings 82 (e.g., conduits or holes) in the flow sleeve 64 and one or more second openings 84 (e.g., conduits or holes) in the liner 62. As shown, the second flow 80 of the combustion fluid 70 may enter the combustion chamber 60 downstream of the first flow 74 of the combustion fluid 70 in a direction that is generally transverse (e.g., a radial direction) to a flow direction 86 within the combustor 14.

The combustor 14 ignites and combusts the combustion fluid 70 in the combustion chamber 60 and passes the hot pressurized combustion gases 30 into the turbine 16. The combustion gases 30 are passed through the exhaust outlet 34, and at least some of the combustion gases 30 are directed into the recirculating fluid compressor 42. In the illustrated embodiment, the recirculating fluid compressor 42 compresses the combustion gases 30 and directs the compressed combustion gases 44 (e.g., recirculating fluid or EGR fluid) toward the combustor 14. As shown, a first flow 88 of the recirculating fluid 44 passes through an impingement sleeve 90 (e.g., a perforated sleeve) of a transition piece 91 of the combustor 14 and into a second generally annular volume 92 between the liner 62 and the flow sleeve 64. The first flow 88 of the recirculating fluid 44 may cool the liner 62 as the first flow 88 flows lengthwise along the liner 62 toward the upstream end 54 of the combustor 14. The first flow 88 may then flow radially into the combustion chamber 60 via one or more openings 93 in the liner 62, where the first flow 88 is mixed with the combustion fluid 70.

A second flow 94 of the recirculating fluid 44 does not pass through the impingement sleeve 90, but rather, is directed toward the fluid extraction conduit 46. In the illustrated embodiment, the second flow 94 of the recirculating fluid 44 flows into a third generally annular volume 96 between the flow sleeve 64 and the case 66. As shown, the third generally annular volume 96 extends around at least a portion of the second generally annular volume 92 (e.g., the second generally annular volume 92 and the third generally annular volume 96 may extend about an axis of the combustor and/or are coaxial). As used herein, the terms annular, generally annular, or generally annular volume may refer to an annular or non-annular volume having various arcuate surfaces and/or flat surfaces. The second flow 94 flows generally toward the upstream end 54 of the combustor 14 within the third generally annular volume 96 and eventually flows into the extraction conduit 46. An aft end 97 of the flow sleeve 64 is coupled to the impingement sleeve 90 via a ring 99, and an aft portion 98 of the flow sleeve 64 separates the second generally annular volume 92 from the third generally annular volume 96. Thus, once the first flow 88 of the recirculating fluid 44 passes through the impingement sleeve 90 and into the second generally annular volume 92, the first flow 88 and the second flow 94 of the recirculating fluid 44 are separated (e.g., isolated) from one another. Additionally, as discussed below, the second flow 94 of the recirculating fluid 44 within the combustor 14 is separated (e.g., isolated) from the combustion fluid 70.

The impingement sleeve 90 may be configured to enable a particular volume or percentage of the recirculating fluid 44 into the second generally annular volume 92. Thus, the first flow 88 of the recirculating fluid 44 may be any suitable fraction of the recirculating fluid 44 output by the recirculating fluid compressor 42. For example, approximately 50 percent of the recirculating fluid 44 may flow into the second generally annular volume 92, while approximately 50 percent of the recirculating fluid 44 may flow into the third generally annular volume 96. In other embodiments, approximately 10, 20, 30, 40, 60, 70, 80, 90 percent or more of the recirculating fluid 44 output by the recirculating fluid compressor 42 may flow through the impingement sleeve 90 and into the second generally annular volume 92. In some embodiments, approximately 10-75 percent, 20-60 percent, or 30-50 percent of the recirculating fluid 44 output by the recirculating fluid compressor 42 may flow through the impingement sleeve 90 and into the second generally annular volume 92.

In the illustrated embodiment, the fluid extraction conduit 46 is positioned axially between the impingement sleeve 90 and the upstream end 54 of the combustor 14 (e.g., upstream from the impingement sleeve 90 and downstream of the head end 72), although the fluid extraction conduit 46 may be disposed in any suitable position for directing the recirculating fluid 44 away from the recirculating fluid compressor 42 and/or from the combustor 14. In certain embodiments, it may be desirable for the second flow 94 of the recirculating fluid 44 to maintain a relatively high pressure as the second flow 94 flows toward the extraction conduit 46. Thus, the third generally annular volume 96 may have a relatively large cross-sectional area (e.g., a flow area) configured to maintain the relatively high pressure of the second flow 94. As space within the combustor 14, and particularly space between the liner 62 and the case 66 may be limited, the flow area of the third generally annular volume 96 may be greater than a flow area of the second generally annular volume 92 along a length of the third generally annular volume 96 to facilitate maintenance of the high pressure of the second flow 94. For example, the flow area of the third generally annular volume 96 may be approximately 10, 20, 30, 40, 50, 60 and/or more percent larger than the flow area of the second generally annular volume 92 along the length of the second generally annular volume 92. Such a configuration may enable a compact design of the combustor 14 and efficient fluid flow, while also maintaining a relatively high pressure of the second flow 94 of the recirculating fluid 44 as this fluid travels toward the extraction conduit 46.

Additionally, in the illustrated embodiment, a flange 100 extends between the flow sleeve 64 and the case 66. The flange 100 is configured to separate the second flow 94 of the recirculating fluid 44 in the third generally annular volume 96 from the combustion fluid 70 in the first generally annular volume 76. The flange 100 may have any suitable form for separating these fluids. As shown, the flange 100 extends radially outward from and circumferentially about the flow sleeve 64 (e.g., the flange 100 is annular). The flange 100 may be integrally formed with the flow sleeve 64 from a single piece of material, or the flange 100 may be welded to the flow sleeve 64. In other embodiments, the flange 100 may be coupled to the flow sleeve 64 via any suitable fasteners (e.g., a plurality of threaded fasteners, such as bolts). The flange 100 may also be coupled to the case 66 via any suitable technique. The flange 100 may be integrally formed with the case 66 from a single piece of material, or the flange 100 may be welded to the case 66. In other embodiments, the flange 100 may be coupled to the case 66 via any suitable fasteners (e.g., a plurality of threaded fasteners, such as bolts). The flange 100 blocks the flow of the combustion fluid 70 and the second flow 94 of the recirculating fluid 44 across the flange 100. Additionally, the seal 71 between the cap 68 and the forward end 69 of the flow sleeve 64 blocks the first flow 88 of the recirculating fluid 44 from entering the head end 72 of the combustor 14. Thus, the cap 68, the seal 71, the forward portion 78 of the flow sleeve 64, and the flange 100 generally separate the combustion fluid 70 and the recirculating fluid 44 from one another. Furthermore, the first flow 88 of the recirculating fluid 44 is at a higher pressure than the combustion fluid 70 flowing from the first annular space 76 into the combustion chamber 60, and this pressure differential blocks the combustion fluid 70 from flowing downstream into the second generally annular volume 92.

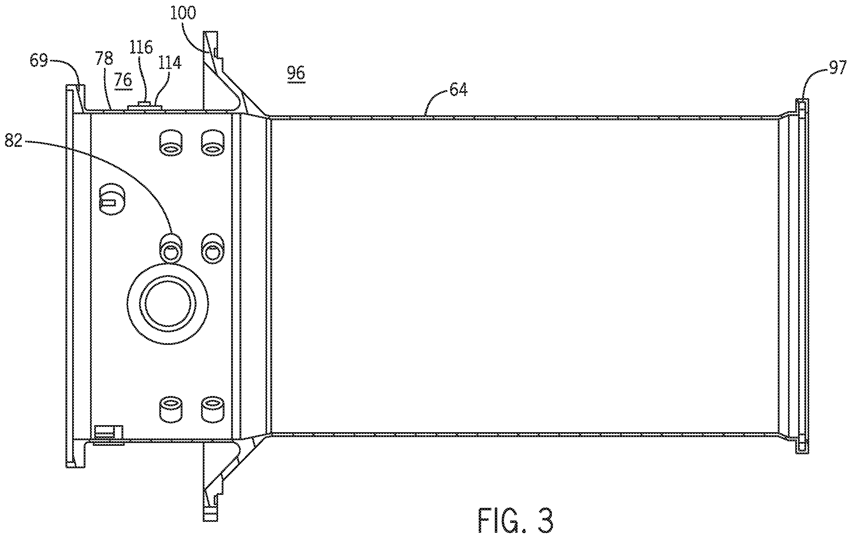

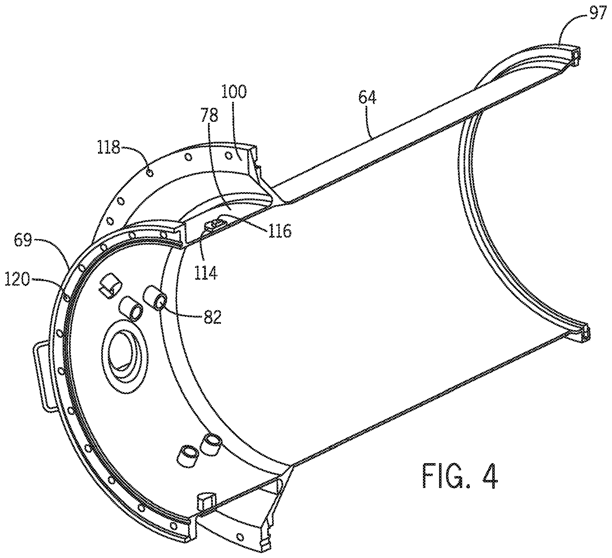

FIG. 3 is a cross-sectional side view schematic of the flow sleeve 64 of the combustor 14, and FIG. 4 is a cutaway perspective view of the flow sleeve 64 of the combustor 14, in accordance with an embodiment. The flow sleeve 64 extends between the forward end 69 and the aft end 97. The forward end 69 of the flow sleeve 64 is configured to be coupled to the cap 68 to form the seal 71, while the aft end 97 of the flow sleeve 64 is configured to be coupled to the impingement sleeve 90 via the ring 99, as shown in FIG. 2. The flange 100 extends radially outward from and extends circumferentially about the flow sleeve 64. As discussed above, the flange 100 is configured to extend between the flow sleeve 64 and the case 66, thereby separating the first generally annular volume 76 that is configured to receive the combustion fluid 70 from the third generally annular volume 96 that is configured to receive the second flow 94 of the recirculating fluid 44, as shown in FIG. 2. The forward portion 78 of the flow sleeve 64 includes the openings 82 to enable the combustion fluid 70 to flow radially inward from the first generally annular volume 76 toward the combustion chamber 60. Additionally, in the illustrated embodiments, one or more bosses 114 are provided in the forward portion 78 of the flow sleeve 64. The one or more bosses 114 may enable placement of hardware through the flow sleeve 64 and into the combustion chamber 60. As shown, the one or more bosses 114 may include floating collars 116 to block fluid flow through the one or more bosses 114. Furthermore, as shown in FIG. 4, the flange 100 may have apertures 118 that are configured to receive suitable fasteners (e.g., a plurality of threaded fasteners, such as bolts) to couple the flange 100 to the case 66. In some embodiments, the forward end 69 of the flow sleeve 64 may include apertures 120 that are configured to receive suitable fasteners (e.g., a plurality of threaded fasteners, such as bolts) to couple the flow sleeve 64 to the cap 68.

Technical effects of the disclosed embodiments include systems for controlling the flow of the combustion fluid 70 and the recirculating fluid 44 within the engine 10. The disclosed embodiments recirculate combustion gases 30, which may be used to cool the combustor liner 62 and/or may be extracted for other purposes, for example. The first flow 88 of the recirculating fluid 44 may flow along the liner 62, thereby cooling the liner 62, while the second flow 94 of the recirculating fluid 44 may be extracted from the combustor 14. The first flow 88 and the second flow 94 of the recirculating fluid 44 may be separated from one another via the flow sleeve 64. Additionally, the recirculating fluid 44 may be separated from the combustion fluid 70 via the cap 68, the forward portion 78 of the flow sleeve 64, the flange 100, and/or the pressure differential between the first flow 88 of recirculating fluid 44 and the combustion fluid 70. The disclosed embodiments may advantageously reduce emissions via recirculating the combustion gases 30. Additionally, the disclosed embodiments may provide a compact system for efficiently separating and directing various fluids within the combustor 14.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (10), comprising:
a turbine combustor (14), comprising:
a housing (66);
a combustion chamber (60);
a liner (62) disposed within the housing and defining the combustion chamber;
a flow sleeve (64) disposed within the housing and disposed about the liner; an extraction outlet (46);
a first volume (76) configured to receive a combustion fluid (70) and to direct the combustion fluid into the combustion chamber, wherein the first volume is configured to direct at least some (80) of the combustion fluid into the combustion chamber in a radial direction (50) via one or more first combustion fluid openings (82) in the flow sleeve and one or more second combustion fluid openings (84) in the liner,
a second volume (92) configured to receive a first flow (88) of an exhaust gas (44) and to direct the first flow of the exhaust gas into the combustion chamber; and
a third volume (96) defined between the housing and an aft portion of the flow sleeve and disposed axially downstream from the first volume and circumferentially about at least a portion (98) of the second volume, wherein the third volume is configured to receive a second flow (94) of the exhaust gas and to direct the second flow of the exhaust gas out of the turbine combustor via the extraction outlet, the third volume is isolated from each of the first volume and the second volume, and the third volume is isolated from the first volume by a flange (100) that extends radially outward from the flow sleeve to the housing.

2. The system of claim 1, wherein the extraction outlet is positioned between a transition piece (91) and a head end (72) of the combustor.

3. The system of claim 1, wherein the flow sleeve (64) is disposed radially outward of the liner, the second volume is defined between the liner and the flow sleeve, and an aft portion (98) of the flow sleeve isolates the third volume from the second volume.

4. The system of claim 1, comprising an exhaust gas compressor (42) configured to compress and to route the exhaust gas to the turbine combustor.

5. The system of claim 1, comprising a gas turbine engine having the turbine combustor, wherein the gas turbine engine is a stoichiometric exhaust gas recirculation gas turbine engine.

6. The system of claim 1, comprising an exhaust gas extraction system (45) coupled to the extraction outlet, and a hydrocarbon production system (47) coupled to the exhaust gas extraction system.

7. The system of claim 1, wherein the first volume is disposed within a head end (72) of the turbine combustor.

8. The system of claim 7, comprising:
a cap (68) positioned proximate to the head end of the turbine combustor and coupled to a forward end (69) of the flow sleeve to form a seal (71);
wherein the second volume is defined between the liner and flow sleeve, and the seal is configured to block the first flow of the exhaust gas from flowing into the head end of the turbine combustor.

9. The system of claim 8, wherein a forward portion (78) of the flow sleeve comprises the one or more first combustion fluid openings configured to enable the combustion fluid to flow radially inward through the flow sleeve and toward the combustion chamber.

10. The system of claim 1, wherein a first cross-sectional flow area of the second volume (92) is less than a second cross-sectional flow area of the third volume (96).

11. A method, comprising:
combusting an oxidant (18) and a fuel (26) in a combustion chamber (60) of a turbine combustor (14) according to claim 1 to generate combustion products (30);
compressing at least some of the combustion products generated by the combustor to generate compressed combustion products (44);
cooling a liner (62) of the turbine combustor using a first flow (88) of the compressed combustion products; and
isolating a second flow (94) of the compressed combustion products within the turbine combustor from the oxidant, the fuel, and the first flow of the compressed combustion products, wherein the second flow of the compressed combustion products are isolated from the first flow of the compressed combustion products by a flow sleeve (64) that extends circumferentially about the liner, and the second flow of the compressed combustion products is isolated from the oxidant and the fuel by a flange (100) that extends radially outwardly from the flow sleeve to a housing (66) of the turbine combustor; and
routing at least some of the oxidant, the fuel, or both, into the combustion chamber in a radial direction (40) via one or more first combustion fluid openings (82) in the flow sleeve and one or more second combustion fluid openings (84) in the liner.

12. The method of claim 11, wherein combusting the oxidant and the fuel comprises operating the turbine combustor in a stoichiometric combustion mode of operation.

13. The method of claim 11, comprising directing the first flow of the compressed combustion products into the combustion chamber.

14. The method of claim 11, comprising extracting the second flow of the compressed combustion products out of the turbine combustor between a transition piece (91) and a head end (72) of the turbine combustor.

15. The method of claim 11, wherein the first flow of the compressed combustion products comprises approximately 50 percent of the compressed combustion products output by a compressor (42).

## Patentansprüche

1. System (10), umfassend:
eine Turbinenbrennkammer (14), umfassend:
ein Gehäuse (66);
eine Verbrennungskammer (60);
eine Auskleidung (62), die innerhalb des Gehäuses angeordnet ist und die Verbrennungskammer umgrenzt;
eine Strömungsmanschette (64), die innerhalb des Gehäuses angeordnet ist und um die Auskleidung angeordnet ist;
einen Absaugauslass (46);
ein erstes Volumen (76), das konfiguriert ist, um ein Verbrennungsfluid (70) aufzunehmen und das Verbrennungsfluid in die Verbrennungskammer zu leiten, wobei das erste Volumen konfiguriert ist, um wenigstens einen Teil (80) des Verbrennungsfluids in die Verbrennungskammer in radialer Richtung (50) über eine oder mehrere erste Verbrennungsfluidöffnungen (82) in der Strömungsmanschette und eine oder mehrere zweite Verbrennungsfluidöffnungen (84) in der Auskleidung zu leiten;
ein zweites Volumen (92), der konfiguriert ist, um einen ersten Strom (88) eines Abgases (44) aufzunehmen und den ersten Strom des Abgases in die Verbrennungskammer zu leiten; und
ein drittes Volumen (96), das zwischen dem Gehäuse und einem hinteren Teil der Strömungsmanschette definiert ist und axial stromabwärts vom ersten Volumen und rund um wenigstens einen Teil (98) des zweiten Volumens angeordnet ist, wobei das dritte Volumen konfiguriert ist, um einen zweiten Strom (94) des Abgases aufzunehmen und den zweiten Strom des Abgases über den Absaugauslass aus der Turbinenbrennkammer heraus zu leiten, wobei das dritte Volumen sowohl vom ersten Volumen als auch vom zweiten Volumen isoliert ist und das dritte Volumen vom ersten Volumen durch einen Flansch (100) isoliert ist, der sich radial von der Strömungsmanschette nach außen zum Gehäuse erstreckt.

2. System nach Anspruch 1, wobei der Absaugauslass zwischen einem Übergangsstück (91) und einem Kopfende (72) der Brennkammer positioniert ist.

3. System nach Anspruch 1, wobei die Strömungsmanschette (64) radial auswärts von der Auskleidung angeordnet ist, das zweite Volumen zwischen der Auskleidung und der Strömungsmanschette definiert ist, und ein hinterer Teil (98) der Strömungsmanschette das dritte Volumen vom zweiten Volumen isoliert.

4. System nach Anspruch 1, umfassend einen Abgaskompressor (42), der konfiguriert ist, um das Abgas zu komprimieren und das Abgas an die Turbinenbrennkammer zu leiten.

5. System nach Anspruch 1, umfassend ein Gasturbinentriebwerk mit der Turbinenbrennkammer, wobei das Gasturbinentriebwerk ein Gasturbinentriebwerk mit stöchiometrischer Abgasrückführung ist.

6. System nach Anspruch 1, umfassend ein Abgasabsaugsystem (45), gekoppelt an den Absaugauslass, und ein Kohlenwasserstofferzeugungssystem (47), gekoppelt an das Abgasabsaugsystem.

7. System nach Anspruch 1, wobei das erste Volumen innerhalb eines Kopfendes (72) der Turbinenbrennkammer angeordnet ist.

8. System nach Anspruch 7, umfassend:
eine Kappe (68), die neben dem Kopfende der Turbinenbrennkammer positioniert ist und mit einem vorderen Ende (69) der Strömungsmanschette verbunden ist, um einen Verschluss (71) zu bilden;
wobei das zweite Volumen zwischen der Auskleidung und der Strömungsmanschette definiert ist und der Verschluss konfiguriert ist, um zu verhindern, dass der erste Strom des Abgases in das Kopfende der Turbinenbrennkammer strömt.

9. System nach Anspruch 8, wobei ein vorderer Teil (78) der Strömungsmanschette die eine oder die mehreren ersten Verbrennungsfluidöffnungen umfasst, die konfiguriert sind, um zu ermöglichen, dass das Verbrennungsfluid radial nach innen durch die Strömungsmanschette und zur Verbrennungskammer hin strömt.

10. System nach Anspruch 1, wobei eine erste Strömungsquerschnittsfläche des zweiten Volumens (92) kleiner ist als eine zweite Strömungsquerschnittsfläche des dritten Volumens (96).

11. Verfahren, umfassend:
Verbrennen eines Oxidationsmittels (18) und eines Brennstoffs (26) in einer Verbrennungskammer (60) einer Turbinenbrennkammer (14) gemäß Anspruch 1, um Verbrennungsprodukte (30) zu erzeugen;
Komprimieren wenigstens eines Teils der von der Brennkammer erzeugten Verbrennungsprodukte, um komprimierte Verbrennungsprodukte (44) zu erzeugen;
Kühlen einer Auskleidung (62) der Turbinenbrennkammer mittels eines ersten Stroms (88) der komprimierten Verbrennungsprodukte; und
Isolieren eines zweiten Stroms (94) der komprimierten Verbrennungsprodukte innerhalb der Turbinenbrennkammer vom Oxidationsmittel, vom Brennstoff und vom ersten Strom der komprimierten Verbrennungsprodukte, wobei der zweite Strom der komprimierten Verbrennungsprodukte vom ersten Strom der komprimierten Verbrennungsprodukte durch eine Strömungsmanschette (64) isoliert ist, welche sich rund um die Auskleidung erstreckt, und der zweite Strom der komprimierten Verbrennungsprodukte vom Oxidationsmittel und vom Brennstoff durch einen Flansch (100) isoliert ist, der sich radial auswärts der Strömungsmanschette zu einem Gehäuse (66) der Turbinenbrennkammer erstreckt; und
Leiten wenigstens eines Teils des Oxidationsmittels, des Brennstoffs oder beider in die Verbrennungskammer in radialer Richtung (40) über eine oder mehrere erste Verbrennungsfluidöffnungen (82) in der Strömungsmanschette und eine oder mehrere zweite Verbrennungsfluidöffnungen (84) in der Auskleidung.

12. Verfahren nach Anspruch 11, wobei das Verbrennen des Oxidationsmittels und des Brennstoffs das Betreiben der Turbinenbrennkammer in einem stöchiometrischen Verbrennungsbetriebsmodus umfasst.

13. Verfahren nach Anspruch 11, umfassend das Leiten des ersten Stroms der komprimierten Verbrennungsprodukte in die Verbrennungskammer.

14. Verfahren nach Anspruch 11, umfassend das Absaugen des zweiten Stroms der komprimierten Verbrennungsprodukte aus der Turbinenbrennkammer zwischen einem Übergangsstück (91) und einem Kopfende (72) der Turbinenbrennkammer.

15. Verfahren nach Anspruch 11, wobei der erste Strom der komprimierten Verbrennungsprodukte etwa 50 Prozent des Ausstoßes an komprimierten Verbrennungsprodukten von einem Kompressor (42) umfasst.

## Revendications

1. Système (10) comprenant :
un brûleur de turbine (14) comprenant :
un boîtier (66) ;
une chambre de combustion (60) ;
un revêtement (62) disposé à l'intérieur du boîtier et définissant la chambre de combustion ;
un manchon d'écoulement (64) disposé à l'intérieur du boîtier et disposé autour du revêtement ;
une sortie d'extraction (46) ;
un premier volume (76) configuré pour recevoir un fluide de combustion (70) et pour diriger le fluide de combustion dans la chambre de combustion, le premier volume étant configuré pour diriger au moins une certaine partie (80) du fluide de combustion dans la chambre de combustion dans une direction radiale (50) via une ou plusieurs premières ouvertures de fluide de combustion (82) dans le manchon d'écoulement et une ou plusieurs secondes ouvertures de fluide de combustion (84) dans le revêtement,
un deuxième volume (92) configuré pour recevoir un premier écoulement (88) d'un gaz d'échappement (44) et pour diriger le premier écoulement de gaz d'échappement dans la chambre de combustion ; et
un troisième volume (96) défini entre le boîtier et une partie arrière du manchon d'écoulement et disposé de manière axiale en aval du premier volume et de manière circonférentielle autour d'au moins une partie (98) du deuxième volume, le troisième volume étant configuré pour recevoir un second écoulement (94) du gaz de combustion et pour diriger le second écoulement du gaz de combustion hors du brûleur de turbine via la sortie d'extraction, le troisième volume est isolé de chacun parmi le premier volume et le deuxième volume, et le troisième volume étant isolé du premier volume par une bride (100) qui s'étend radialement vers l'extérieur du manchon d'écoulement au boîtier.

2. Système selon la revendication 1, dans lequel la sortie d'extraction est positionnée entre une pièce de transition (91) et une extrémité de tête (72) du brûleur.

3. Système selon la revendication 1, dans lequel le manchon d'écoulement (64) est disposé radialement à l'extérieur du revêtement, le deuxième volume est défini entre le revêtement et le manchon d'écoulement, une partie arrière (98) du manchon d'écoulement isole le troisième volume du deuxième volume.

4. Système selon la revendication 1, comprenant un compresseur de gaz d'échappement (42) configuré pour comprimer et acheminer le gaz d'échappement vers le brûleur de turbine.

5. Système selon la revendication 1, comprenant un moteur de turbine à gaz ayant le brûleur de turbine, dans lequel le moteur de turbine à gaz est un moteur de turbine à gaz à recirculation de gaz d'échappement stoechiométrique.

6. Système selon la revendication 1, comprenant un système d'extraction de gaz d'échappement (45) couplé à la sortie d'extraction, et un système de production d'hydrocarbure (47) couplé au système d'extraction de gaz d'échappement.

7. Système selon la revendication 1, dans lequel le premier volume est disposé à l'intérieur d'une extrémité de tête (72) du brûleur de turbine.

8. Système selon la revendication 7, comprenant :
un capuchon (68) positionné à proximité de l'extrémité de tête du brûleur de turbine et couplé à une extrémité avant (69) du manchon d'écoulement afin de former un joint d'étanchéité (71) ;
dans lequel le deuxième volume est défini entre le revêtement et le manchon d'écoulement, et le joint d'étanchéité est configuré pour empêcher l'écoulement du premier écoulement du gaz d'échappement dans l'extrémité de tête du brûleur de turbine.

9. Système selon la revendication 8, dans lequel une partie avant (78) du manchon d'écoulement comprend les une ou plusieurs premières ouvertures de fluide de combustion configurées pour permettre au fluide de combustion de s'écouler radialement vers l'intérieur à travers le manchon d'écoulement et vers la chambre de combustion.

10. Système selon la revendication 1, dans lequel une première zone d'écoulement transversale du deuxième volume (92) est inférieure à une seconde zone d'écoulement transversale du troisième volume (96).

11. Procédé comprenant les étapes consistant à :
faire brûler un comburant (18) et un combustible (26) dans une chambre de combustion (60) d'un brûleur de turbine (14) selon la revendication 1, afin de générer des produits de combustion (30) ;
comprimer au moins une certaine partie des produits de combustion générés par le brûleur afin de générer des produits de combustion (44) comprimés ;
faire refroidir un revêtement (62) du brûleur de turbine en utilisant un premier écoulement (88) des produits de combustion comprimés ; et
isoler un second écoulement (94) des produits de combustion comprimés à l'intérieur du brûleur de turbine, du comburant, du combustible et du premier écoulement de produits de combustion comprimés, le second écoulement de produits de combustion comprimés étant isolé du premier écoulement de produits de combustion comprimés par un manchon d'écoulement (64) qui s'étend de manière circonférentielle autour du revêtement, et le second écoulement de produits de combustion comprimés étant isolé du comburant et du combustible par une bride (100) qui s'étend radialement vers l'extérieur à partir du manchon d'écoulement jusqu'à un boîtier (66) du brûleur de turbine ; et
acheminer au moins une partie du comburant, du combustible ou des deux, dans la chambre de combustion dans une direction radiale (40) via une ou plusieurs premières ouvertures de fluide de combustion (82) dans le manchon d'écoulement et une ou plusieurs secondes ouvertures de fluide de combustion (84) dans le revêtement.

12. Procédé selon la revendication 11, dans lequel la combustion du comburant et du combustible comprend l'étape consistant à actionner le brûleur de turbine dans un mode de fonctionnement de combustion stoechiométrique.

13. Procédé selon la revendication 11, comprenant l'étape consistant à diriger le premier écoulement de produits de combustion comprimés dans la chambre de combustion.

14. Procédé selon la revendication 11, comprenant l'étape consistant à extraire le second écoulement de produits de combustion comprimés hors du brûleur de turbine entre une pièce de transition (91) et une extrémité de tête (72) du brûleur de turbine.

15. Procédé selon la revendication 11, dans lequel le premier écoulement de produits de combustion comprimés comprend approximativement 50 pour cent des produits de combustion comprimés produits par un compresseur (42).
